# EUROPÄISCHE PATENTSCHRIFT

(11) **EP 0 876 701 B1**
(45) Veröffentlichungstag und Bekanntmachung des Hinweises auf die Patenterteilung: **13.11.2002**
(21) Anmeldenummer: 97901557.5
(22) Anmeldetag: 20.01.1997
(51) Int. Cl.: H02J 7/14

(54) **BORDNETZ EINES KRAFTFAHRZEUGES**
MOTOR VEHICLE POWER SUPPLY NETWORK
RESEAU DE BORD D'UNE AUTOMOBILE

(30) Priorität: 23.01.1996 DE 19602171
(43) Veröffentlichungstag der Anmeldung: 11.11.1998
(73) Patentinhaber: Continental Teves AG & Co. oHG, 60488 Frankfurt (DE)
(72) Erfinder: HEISE, Andreas, D-64546 Mörfelden (DE)
(74) Vertreter: Blum, Klaus-Dieter, Dipl.-Ing.
(86) Internationale Anmeldenummer: EP9700242
(87) Internationale Veröffentlichungsnummer: WO97027660

(56) Entgegenhaltungen:
- EP-A- 0 246 976
- EP-A- 0 574 743
- EP-A- 0 646 498

## Beschreibung

Die Erfindung bezieht sich auf das Bordnetz eines Kraftfahrzeuges mit einer Hauptleitung, die unmittelbar oder über eine Schmelzsicherung mit der Fahrzeugbatterie verbunden ist, mit einer Nebenleitung, die über einen Zündschalter mit der Batterie verbunden ist, und mit einem Spannungsregler, der einen Leistungseingang, einen Signaleingang sowie einen Ausgang aufweist, wobei der Signaleingang an die Nebenleitung und der Leistungseingang über eine Diode an die Hauptleitung angeschlossen sind und wobei der Leistungseingang über eine weitere Diode, die in Richtung zum Leistungseingang durchlässig ist, auch mit der Nebenleitung verbunden ist.

Ein derartiges Bordnetz ist aus der EP 0 646 498 A1 bekannt. An die Haupt- und Nebenleitungen ist in diesem Beispiel u.a. ein Regler angeschlossen, der einen nichtflüchtigen Datenspeicher enthält. Bei Ausfall der Spannung auf der Hauptleitung wird die Spannung an dem Eingang des Reglers, zu dem die Hauptleitung führt, mit Hilfe einer Hilfsquelle, nämlich einer wiederaufladbaren Batterie, gepuffert. Die Hauptleitung ist außerdem über zwei in Reihe geschaltete Entkopplungsdioden, zwischen denen die Hilfsquelle angeschlossen ist, mit der der Nebenleitung verbunden. Eine Pufferung der Spannung auf der Nebenleitung ist nicht vorgesehen.

Der Spannungsregler des Bordnetzes gibt eine Spannung ab, die von Spannungsschwankungen am Eingang unabhängig ist. Derartige Spannungsregler sind notwendig, um ein sicheres Arbeiten von elektronischen Steuer- und Regeleinrichtungen im Kraftfahrzeug zu gewährleisten. Hierbei kann es sich z.B. um einen Regler für eine elektrisch geregelte hydraulische Bremsanlage (ABS) handeln, mit der ein Blockieren der Fahrzeugräder verhindert wird.

Üblicherweise wird der Leistungseingang des Spannungsreglers über eine Diode mit der Hauptleitung des Bordnetzes, die direkt (bzw über eine Schmelzsicherung) mit der Batterie verbunden ist, gekoppelt. Diese Hauptleitung wird üblicherweise mit BAT bezeichnet.

Der Eingang des Spannungsreglers ist über einen Kondensator mit dem Masseanschluß des Bordnetzes verbunden. Der Kondensator gewährleistet, daß auch bei Spannungseinbrüchen auf der Hauptleitung zumindest für einen gewissen Zeitraum (Entladezeit des Kondensators) der Leistungseingang des Spannungsreglers noch mit ausreichender Spannung versorgt wird.

Der Spannungsregler weist weiterhin einen Signaleingang auf, der mit der Nebenleitung des Bordnetzes verbunden ist. Die Nebenleitung ist über einen Zündschalter ebenfalls mit dem Pluspol der Batterie verbunden und wird im Automobilbau üblicherweise mit den Großbuchstaben IGN (Ignition) bezeichnet. Wird an den Signaleingang eine Spannung angelegt, so wird ein interner Schalter im Spannungsregler betätigt, so daß der Spannungsregler aktiviert wird. Auch der Signaleingang ist mit einem Pufferkondensator versehen, so daß Spannungseinbrüche auf der Nebenleitung nicht sofort zum Abschalten des Spannungsreglers führen.

Diese externe Beschaltung des Spannungsreglers weist Nachteile auf. So sind zwei Pufferkondensatoren notwendig, wobei die den Kondensatoren vorgeschalteten Dioden so ausgelegt sein müssen, daß sie den hohen Ladestrom, der beim Einschalten auftritt, widerstehen können.

Außerdem kann, da an beide Kondensatoren erhöhte Temperatur- und Spannungsanforderungen gestellt sind, die Kapazität der Kondensatoren nicht beliebig erhoht werden, so daß die zu realisierende Pufferzeit nicht zu lang gewählt werden kann. Dies wiederum hat zur Folge, daß lang andauernde Spannungseinbrüche ein Abschalten des Spannungsreglers bewirken.

Die Erfindung beruht daher auf der Aufgabe, das Bordnetz eines Kraftfahrzeugs, das einen Spannungsregler versorgt, auf einfache Weise derart zu gestalten, daß bei Spannungseinbrüchen, sei es auf der Haupt- oder auf der Nebenleitung, der Spannungsregler noch möglichst lange aktiv bleibt, damit die angeschlossenen Elektronikbauteile möglichst lange mit einer konstanten Spannung versorgt werden können.

Zur Lösung dieser Aufgabe wird erfindungsgemäß vorgeschlagen, bei einem Bordnetz der eingangs genannten Art einen Pufferkondensator so an einen gemeinsamen Verbindungspunkt der Nebenleitung, der weiteren Diode und des hochohmig ausgeführten Signaleingangs anzuschließen, daß der Pufferkondensator die Eingangsspannungen sowohl an dem Signaleingang als auch an dem Leistungseingang puffert, und die Kapazität des Pufferkondensators auf die notwendige Pufferzeit für den Leistungseingang derart abzustimmen, daß bei Spannungszusammenbruch sowohl an der Hauptleitung als auch an der Nebenleitung am Leistungseingang für eine gewisse Entladungszeit eine ausreichende Spannung geliefert wird.

Die erfindungsgemäße Ausgestaltung des Bordnetzes hat zur Folge, daß auf den Pufferkondensator, der normalerweise an der Hauptleitung vorgesehen ist, verzichtet werden kann, da der nunmehr einzige Pufferkondensator, der an der Nebenleitung angeschlossen ist, dessen Aufgabe übernimmt.

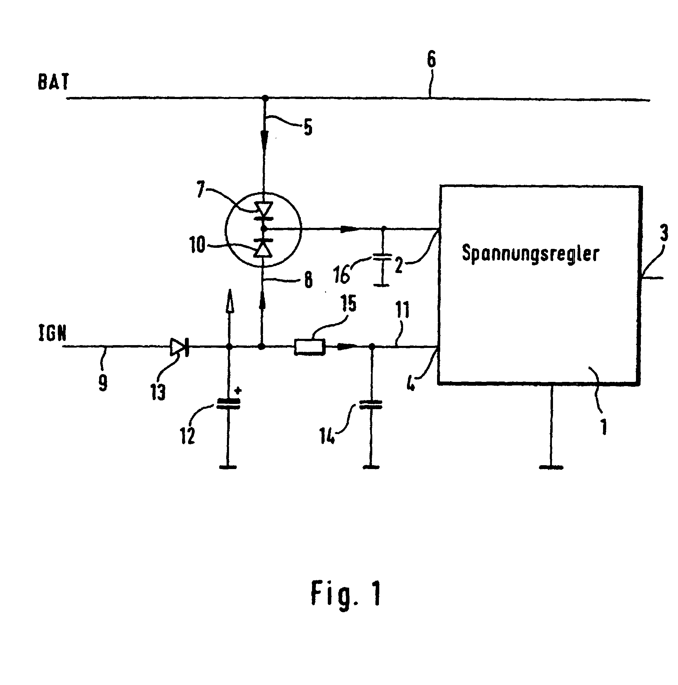

Zur Erläuterung dieses Erfindungsgedankens wird das in der Fig. 1 dargestellte Bordnetz bzw. die externe Beschaltung eines Spannungsreglers 1 näher erläutert.

Die Fig.1 zeigt einen Spannungsregler 1 mit einem Leistungseinganggang 2, einen Ausgang 3 sowie einen Signaleingang 4.Weitere Ein- und Ausgänge können vorgesehen werden. Der Leistungseingang 2 ist über eine Leitung 5, die an die Hauptleitung 6 anknüpft, unmittelbar(bzw unter Zwischenschaltung einer Schmelzsicherung) mit dem Pluspol des Bordnetzes verbunden. Der Leistungseingang 2 des Spannungsreglers 1 ist über eine weitere Leitung 8 mit der Nebenleitung 9 über einen nicht dargestellten Zündschalter ebenfalls mit dem Pluspol des Bordnetzes verbunden. Sowohl in die Leitung 5, die zur Hauptleitung 6 führt, als auch in die Leitung 8, die zur Nebenleitung 9 führt, sind jeweils eine Diode 7,10 eingefügt, die gegeneinandergeschaltet sind.
Dies hat zur Folge, daß je nachdem, auf welcher Leitung (Hauptleitung 6 oder Nebenleitung 9), die höhere Spannung anliegt, diese zum Leistungseingang 2 weitergeleitet wird. Die einzelnen Dioden 7,10 können auch als kleine Signaldoppeldiode dargestellt werden, da durch sie keine Kondensator-Ladeströme fließen müssen.

Die Nebenleitung 9 schließt über eine weitere Leitung 11 an den Signaleingang 4 des Spannungsreglers 1 an. Die Leitung 8 ist über einen Pufferkondensator 12 mit dem Minuspol des Bordnetzes verbunden, wobei eine Diode 13 in der Nebenleitung 9 verhindert, daß der geladene Kondensator 12 sich entladen kann. Der Signaleingang 4 ist durch eine Widerstand-Kondensator-Kombination 14,15 gegen Spannungsspitzen geschützt. Diese Schutzeinrichtung besteht aus einem Widerstand 15 in der Leitung 11 sowie einem Kondensator 14, der den Signaleingang 4 mit dem Minuspol des Bordnetzes verbindet. Die Kapazität des Schutzkondensators ist wesentlich geringer als die des Pufferkondensators 12. Widerstand 13 und Kondensator 14 bilden daher eine übliche Schutzbeschaltung, die sich nicht auf den eigentlichen Erfindungsgedanken beziehen. Je nach Auslegung des Spannungsreglers kann auch am Leistungseingang 2 ein kleiner Schutzkondensator 16 ( nF-Bereich ) sinnvoll sein.

Die Beschaltung des Spannungsreglers funktioniert wie folgt. Die Spannung auf der Hauptleitung 6 wird über die Diode 7 an den Leistungseingang 2 des Spannungsreglers 1 gelegt. Wenn die Nebenleitung 9 durch Betätigen des Zündschalters mit Spannung versorgt wird, liegt am Signaleingang 4 ein Spannungssignal an, sobald der Pufferkondensator 12 geladen ist. Die Ladezeit des Pufferkondenators 12 ist kurz, da Leitung 9 (IGN) niederohmig ist.

Sobald am Signaleingang 4 ein Spannungssignal anliegt, wird der Spannungsregler 1 aktiv geschaltet, so daß am Ausgang 3 eine konstante Spannung anliegt, auch dann, wenn sich die Spannung auf der Hauptleitung 6 (BAT) ändert, weil z.B. weitere Verbraucher an die Hauptleitung 6 angeschlossen werden.

Es können nun folgende Störfälle betrachtet werden.
1. Die Spannung auf der Hauptleitung bricht zusammen.
2. Die Spannung auf der Nebenleitung bricht zusammen.
3. Die Spannungen sowohl auf der Haupt- als auch auf der Nebenleitung brechen zusammen.

Betrachten wir zunächst den ersten Fall. Wenn die Spannung auf der Hauptleitung zusammenbricht, so wird der Leistungseingang 2 über die sich nun freischaltende Diode 10 mit der Leitung 8 an die Nebenleitung 9 angeschlossen und nun mit der Spannung auf der Nebenleitung 9 versorgt. Praktisch bedeutet dies, daß die Pufferzeit für den Leistungseingang 2 für diesen Fall "unendlich" groß wird, da die Versorgung des Leistungseinganges 2 über die ausreichend Spannung führende Nebenleitung erfolgt.

Im zweiten Fall, wenn die Spannung auf der Nebenleitung zusammenbricht, sorgt der Pufferkondensator 12 dafür, daß für einen relativ langen Zeitraum der Signaleingang mit ausreichender Spannung versorgt wird, so daß der Spannungsregler weiter aktiv bleibt. Die lange Pufferzeit resultiert aus der Dimensionierung (große Kapazität) desPufferkondensators in Hinblick auf den oben erwähnten dritten Fall und der Hochohmigkeit des Signaleingangs, so daß der Spannungsabbau am Kondensator über den hochohmigen Signaleingang nur langsam erfolgt.

Im dritten Fall, wenn sowohl an der Hauptleitung 6 als auch an der Nebenleitung 9 die Spannung zusammenbricht, sorgt der Pufferkondensator 12 dafür, daß zumindest für eine gewisse Entladungszeit, am Leistungseingang des Spannungsreglers 1 eine ausreichende Spannung anliegt. In diesem Fall übernimmt der Pufferkondensator an der Nebenleitung 9 die Aufgabe des Pufferkondensators, der gemäß dem Stand der Technik unmittelbar mit dem Leistungseingang 2 verbunden ist. Der Pufferkondensator 12 sorgt somit sowohl für eine Pufferung der Hauptleitung als auch für eine Pufferung der Nebenleitung. Die Kapazität des Pufferkondensators 12 ist dabei auf die notwendige Pufferzeit für den Leistungseingang 2 abgestimmt.

Man erreicht mit dieser Beschaltung im ungünstigsten Fall somit, praktisch dieselbe Pufferung wie im Stand der Technik, während beim Spannungseinbruch nur auf der Nebenleitung durch die sehr viel höhere Entladezeit des Pufferkondensators der-Spannungsregler 1 länger aktiv bleibt als bei der Lösung im Stand der Technik.

## Patentansprüche

1. Bordnetz eines Kraftfahrzeuges mit einer Hauptleitung (6), die unmittelbar oder über eine Schmelzsicherung mit der Fahrzeugbatterie verbunden ist, mit einer Nebenleitung (9), die über einen Zündschalter mit der Batterie verbunden ist, und mit einem Spannungsregler (1), der einen Leistungseingang (2), einen Signaleingang (4) sowie einen Ausgang (3) aufweist, wobei der Signaleingang (4) an die Nebenleitung (9)und der Leistungseingang über eine Diode (7) an die Hauptleitung (6) angeschlossen sind und wobei der Leistungseingang (2) über eine weitere Diode (10), die in Richtung zum Leistungseingang (2) durchlässig ist, mit der Nebenleitung verbunden ist, **dadurch gekennzeichnet, daß** ein Pufferkondensator (12) so an einen gemeinsamen Verbindungspunkt der Nebenleitung (9), der weiteren Diode (10) und des hochohmig ausgeführten Signaleingangs (4) angeschlossen ist, daß der Pufferkondensator (12) die Eingangsspannungen sowohl an dem Signaleingang (4) als auch an dem Leistungseingang (2) puffert, und daß die Kapazität des Pufferkondensators auf die notwendige Pufferzeit für den Leistungseingang (2) derart abgestimmt ist, daß bei Spannungszusammenbruch sowohl an der Hauptleitung (6) als auch an der Nebenleitung (9) am Leistungseingang (2) für eine gewisse Entladungszeit eine ausreichende Spannung geliefert wird.

2. Bordnetz nach Anspruch 1, **dadurch gekennzeichnet, daß** die Verbindung des Leistungseingangs (2) mit der Hauptleitung (6) frei von einem Pufferkondensator ist.

3. Bordnetz nach Anspruch 1 oder 2, **dadurch gekennzeichnet, daß** in der Nebenleitung (8) eine Diode (13) vorgesehen ist, über die der Pufferkondensator (12) geladen wird.

4. Bordnetz nach einem der vorhergehenden Ansprüche, **dadurch gekennzeichnet, daß** der Signaleingang (4) mit einer Schutzbeschaltung (14, 15) versehen ist.

## Claims

1. Electrical system of an automotive vehicle which includes a main line (6) that is connected to the vehicle battery directly or by way of a safety fuse, an auxiliary line (9) which is connected to the battery by way of an ignition switch, and a voltage controller (1) which has a power input (2), a signal input (4), and an output (3), wherein the signal input (4) is connected to the auxiliary line (9) and the power input is connected to the main line (6) by way of a diode (7), and wherein the power input (2) is connected to the auxiliary line by way of a second diode (10) which is conductive in the direction of the power input (2),
**characterized in that** a buffer capacitor (12) is so connected to a joint junction point of the auxiliary line (9), the second diode (10), and the high-ohmic signal input (4) that the buffer capacitor (12) buffers the input voltages both at the signal input (4) and the power input (2), and **in that** the capacity of the buffer capacitor is conformed to the necessary buffer time for the power input (2) so that when the voltage breaks down on the main line (6) as well as on the auxiliary line (9), a sufficient amount of voltage is provided at the power input (2) for a certain discharge time.

2. Electrical system as claimed in claim 1,
**characterized in that** a buffer capacitor is not provided in the connection between the power input (2) and the main line (6).

3. Electrical system as claimed in claim 1 or claim 2,
**characterized in that** a diode (13) which is used to charge the buffer capacitor (12) is provided in the auxiliary line (8).

4. Electrical system as claimed in any one of the preceding claims,
**characterized in that** the signal input (4) includes a protective wiring (14, 15).

## Revendications

1. Réseau de bord d'un véhicule automobile comportant une ligne principale (6) qui est reliée à une batterie du véhicule, directement ou par un fusible, comportant une ligne secondaire (9) qui est reliée à la batterie par un contacteur d'allumage, et comportant un régulateur de tension (1) qui comprend une entrée d'alimentation (2), une entrée pour signaux (4) ainsi qu'une sortie (3), l'entrée pour signaux (4) étant raccordée à la ligne secondaire (9) et l'entrée d'alimentation étant raccordée à la ligne principale (6), par une diode, et l'entrée d'alimentation (2) étant reliée à la ligne secondaire, par une autre diode (10) qui laisse passer le courant en direction de l'entrée d'alimentation (2), **caractérisé en ce qu'**un condensateur tampon (12) est raccordé à un point de liaison commun de la ligne secondaire (9), de l'autre diode (10) et de l'entrée pour signaux (4) de valeur ohmique élevée, de manière que le condensateur tampon (12) compense les tensions d'entrée aussi bien à l'entrée pour signaux (4) qu'à l'entrée d'alimentation (2), et **en ce que** la capacité du condensateur tampon est adaptée au temps tampon nécessaire pour l'entrée d'alimentation (2), de manière qu'en cas d'annulation de la tension sur la ligne principale (6) comme sur la ligne secondaire (9), une tension suffisante soit fournie à l'entrée d'alimentation (2) pendant un certain temps de décharge.

2. Réseau de bord selon la revendication 1, **caractérisé en ce que** la liaison de l'entrée d'alimentation (2) avec la ligne principale (6) ne comporte pas de condensateur tampon.

3. Réseau de bord selon la revendication 1 ou 2, **caractérisé en ce que** dans la ligne secondaire (8) est prévue une diode (13) par laquelle est chargé le condensateur tampon (12).

4. Réseau de bord selon l'une des revendications précédentes, **caractérisé en ce que** l'entrée pour signaux (4) est pourvue d'un couplage de protection (14, 15).
